(19) **Europäisches Patentamt European Patent Office Office européen des brevets**

(11) **EP 4 457 296 B1**

(12) **EUROPEAN PATENT SPECIFICATION**

(45) Date of publication and mention
of the grant of the patent:
**21.05.2025 Bulletin 2025/21**

(21) Application number: **24710126.4**

(22) Date of filing: **13.03.2024**

(51) International Patent Classification (IPC):
*C09K 8/588* (2006.01)  *C08F 120/56* (2006.01)
*C09K 8/68* (2006.01)  *C09K 8/88* (2006.01)

(52) Cooperative Patent Classification (CPC):
**C09K 8/588; C08F 120/56; C09K 8/68; C09K 8/885**

(86) International application number:
**PCT/EP2024/056692**

(87) International publication number:
**WO 2024/189092 (19.09.2024 Gazette 2024/38)**

(54) **METHOD FOR INJECTING AN AQUEOUS POLYMER SOLUTION INTO AN UNDERGROUND FORMATION**

VERFAHREN ZUM EINSPRITZEN EINER WÄSSRIGEN POLYMERLÖSUNG IN EINE UNTERIRDISCHE FORMATION

PROCÉDÉ D'INJECTION D'UNE SOLUTION POLYMÈRE AQUEUSE DANS UNE FORMATION SOUTERRAINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.03.2023 EP 23161906**

(43) Date of publication of application:
**06.11.2024 Bulletin 2024/45**

(73) Proprietor: **SNF Group
42160 Andrézieux-Bouthéon (FR)**

(72) Inventor: **FAVERO, Cédrick
42160 Andrézieux-Bouthéon (FR)**

(74) Representative: **Cabinet Laurent & Charras
Le Contemporain
50 Chemin de la Bruyère
69574 Dardilly Cedex (FR)**

(56) References cited:
**EP-B1- 3 601 220      EP-B1- 3 601 222
WO-A1-2018/172682   WO-A1-2018/172684
CN-A- 113 528 113**

## Description

### Field of the invention

The invention relates to a method for injecting a sodium or potassium or ammonium 2-acrylomido-2-methylpropanesulfonate homopolymer aqueous solution into an underground formation for the assisted extraction of hydrocarbons (oil and/or gas) or hydraulic fracturing. More specifically, the method relates to the field of preparing polymer solution on fields in modular units for its direct injection into the underground formation.

### Prior art

Documents WO2018/172684, WO2018/172682, EP 3 601 220, EP 3 601 222 and patent applications FR2302305, FR2302307 and FR2302310 of the Applicant highlight the interest of injecting sodium or potassium 2-acrylamido-2-methylpropanesulfonate polymer saline solutions crystalline form into underground formations for the assisted recovery of hydrocarbons (oil and/or gas) or hydraulic fracturing.

For oil or gas assisted recovery techniques, these polymers have improved properties in terms of filterability and chemical and thermal stability.

For hydraulic fracturing, sodium or potassium 2-acrylomido-2-methylpropanesulfonate-based synthetic polymers in hydrated form make it possible to have a very high friction reduction effect, while guaranteeing an improved viscosifying effect in a saline solution (brine). In addition, the good solubility of the polymer in the fracturing fluid, combined with its sulfonic anionic character, makes it possible to avoid its adsorption on the rock, which induces a recovery of conductivity and therefore an increase in the hydrocarbon production yield (oil and/or gas).

However, the synthesis of the sodium or potassium 2-acrylomido-2-methylpropanesulfonate-based polymers in hydrated form is done on manufacturing sites, which are far from the injection wells leading to these underground formations, and due to this, involves expensive logistics which consume a lot of energy to send the polymers at the hydrocarbon development fields.

The physical form of the polymer which makes it possible to have the greatest mass concentration in active material to supply the fields for the EOR or for the hydraulic fracturing is powder. However, this physical form involves specific dissolution units (PSU: *Polymer Slicing Unit,* maturation tanks, see document WO 2008/071808), which are expensive and consume a lot of energy.

Moreover, the powder comes from a polymerisation gel method, which involves an operation of drying the polymer gel to transform it into powder (patent US 5633329). 1 to 5 volumes of water must typically be evaporated for 1 volume of powder, which involves increasing water and energy consumption, and therefore increasing the carbon footprint of the product.

### Summary of the invention

The Applicant has thus developed a method for preparing sodium or potassium or ammonium 2-acrylomido-2-methylpropanesulfonate homopolymer solutions and/or its salts based on modular units in order to be able to carry out all the preparation steps on fields in the proximity of the underground formations to be developed.

This method includes (1) the preparation of sodium or potassium or ammonium 2-acrylomido-2-methylpropanesulfonate in hydrated form in a first location, (2) the synthesis of the polymer and the preparation of a concentrated polymer solution in a second location and finally (3) the dilution of this solution for injection into the underground formation in the third location.

This method makes it possible to manufacture, in a continuous flow, the required quantity of injection solution. In addition, it makes it possible to considerably decrease the logistics costs (transport, dissolution of the polymer) with a low water and carbon footprint (no drying) and it can be transposed over any fields and under any field conditions (saltiness, hardness, temperature, etc.) without needing installations classified as high-risk (chemical).

The only monomer to be sent and to be possibly stored on the first location is 2-acrylamido-2-methylpropane sulfonic acid (AMPS) or one of its salts. This monomer, contrary to monomers such as acrylonitrile, acrylamide or acrylic acid, has the advantage of being in solid form and therefore of not having a risk of leakage or of spreading. In addition, it is not toxic (CMR) and remains stable in the solid state according to the temperature (not temperature-sensitive). Finally, another advantage of AMPS, or one of its salts, compared with acrylamide, is that it can be polymerised at a higher concentration and without needing prior cooling, as less exothermal, which generates energy gains and makes the claimed method transposable anywhere, including in dry zones or with a seasonal water stress.

As an illustration, 1 volume of acrylamide and/or acrylic acid requires to be polymerised in the presence of at least 3 volumes of water and with a prior cooling to 0°C while the AMPS or one of its salts only requires 1 to 2 volumes of water with a start of polymerisation in solution at the ambient temperature.

### Presentation of the invention

More specifically, the invention relates to a method for injecting a sodium or potassium or ammonium 2-acrylomido-2-methylpropanesulfonate homopolymer P aqueous solution and/or its salts, the homopolymer P having an average molecular weight by weight greater than 1 million daltons, the homopolymer P aqueous solution being injected into an underground formation for the assisted extraction of hydrocarbons (oil and/or gas) or hydraulic fracturing, said method comprising the following successive steps:

- in a location **A:**

  * preparation in a mobile unit **U1** of sodium or potassium or ammonium 2-acrylamido-2-methylpropanesulfonate in crystalline form **(AMPS.S),**
  sodium 2-acrylamido-2-methylpropanesulfonate in crystalline form having a powder X-ray diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6°, 2-theta degrees,
  potassium 2-acrylamido-2-methylpropanesulfonate in crystalline form having a powder X-ray diffraction pattern comprising peaks at 13.1°; 14.4°; 16.3°; 19.8°; 23.5°; 24.3°; 26.9°; 27.6°; 29.3°; 30.6°; 31.6°; 34.3°; 36.1°; 41.7°; 44.6°; 46.7°, degrees 2-theta,
  ammonium 2-acrylamido-2-methylpropanesulfonate in crystalline form having a powder X-ray diffraction pattern comprising peaks at 10.1°; 13.1°; 13.2°; 17.5°; 15.6°; 18.1°; 19.5°; 20.0°; 21.4°; 22.8°; 23.6°; 24.8°; 25.1°; 25.8°; 26.2°; 27.4°; 28.1°; 29.4°; 30.2°; 30.8°; 32.0°; 32.9°; 33.2°; 33.9°; 34.4°; 35.0°; 36.2°; 37.7°; 38.8°; 39.6°; 40.4°; 41.4°; 41.9°; 42.8°; 43.5°; 44.8°; 45.5°; 45.7°; 46.5°; 47.0°; 47.4°, degrees 2-theta,
  * collection of an aqueous solution **S1** of sodium or potassium or ammonium 2-acrylamido-2-methylpropanesulfonate **AMPS.OS,** coming from the purge of the AMPS.S preparation **in the mobile unit U1,**

- in a location A' :

  * preparation in a mobile unit **U3** of a homopolymer **P** by gel polymerisation of an **AMPS.S** aqueous solution **S3,**
  * dissolution in a mobile unit **U4** of the polymer **P** in a saline solution **SS1** containing at least 1g/L of alkaline and/or alkaline earth salts in water to obtain a polymer **P** solution **SM,**
  * transfer of the solution **SM** from the location **A'** to a location **B,**

- in the location **B:**

  * dilution in a mobile unit **U5** of at least a factor 4 and as a maximum a factor 60 of the solution **SM** by a saline solution **SS2** containing at least 1g/L of alkaline and/or alkaline earth salts in water to obtain an aqueous solution **SF** containing less than 0.6% by weight of polymer **P,**
  * Injection of the solution **SF** into the underground formation.

In this process:

- in the location **A:** polymerisation (in solution, example of a method: document US 2013090425) in a unit **U2** of the **AMPS.OS** solution **S1** collected in the mobile unit **U1** to obtain an aqueous polymer **P'** solution **S2,**
- transfer through pipes of the solution **S2** from the unit **U2** of the location **A** to the mobile unit **U3** of the location **A',**
- in the location **A':** preparation in a mobile unit **U3,** before the polymerisation of **AMPS.S,** of a composition **CA'** comprising the **AMPS.S** solution **S3** and at least some of the polymer **P'** solution **S2,** the mass ratio **[P']/[AMPS.S]** being of between 0.05 and 0.20, with **[P']** concentration by weight of polymer **P'** in the composition **CA'** and **[AMPS.S]** concentration by weight of **AMPS.S** in the composition **CA'.**

The ranges of values include the lower and upper limits. Thus, the ranges of values "between 0.1 and 1.0" and "from 0.1 to 1" include the values 0.1 and 1.0.

In general, the uncertainty of the peaks of the X-ray powder diffraction diagrams is generally of the order of +/- 0.1°.

According to the present invention, the average molecular weight by weight of the polymer **P** is determined by measuring the intrinsic viscosity. The intrinsic viscosity can be measured by methods known to a person skilled in the art and can, in particular, be calculated from reduced viscosity values for different concentrations by a graphic method consisting of tracing the reduced viscosity values (on the y-axis) according to the concentrations (on the x-axis) and by extrapolating the curve at a zero concentration. The intrinsic viscosity value is read on the y-axis or by using the least-squares method. Then, the average molecular weight by weight can be determined by the famous Mark-Houwink equation:

$$[\eta] = K\, M^{\alpha}$$

$[\eta]$ represents the intrinsic viscosity of the polymer determined by the method for measuring the viscosity in solution,
K represents an empirical constant,
M represents the molecular weight of the polymer,
$\alpha$ represents the Mark-Houwink coefficient,
$\alpha$ and K depend on the particular polymer-solvent system. Tables known to a person skilled in the art give $\alpha$ and K values according to the polymer-solvent system.

The location **A** is advantageously a location comprising at least one mobile storage unit, at least one mobile mixture unit and at least one mobile filtration unit. Thus, the location **A** advantageously makes it possible to have clean water for the radical polymerisation of the **APMS.S** (for example, water coming from a method for treating industrial water and/or rainwater).

Preparing the sodium 2-acrylamido-2-methylpropanesulfonate in crystalline form is done according to the method described in patent application FR2302303.

The present invention also relates to the method for producing the crystalline form of the sodium salt of 2-acrylamido-2-methylpropanesulphonic acid comprising at least the following successive steps:

1) mixing of 2-acrylamido-2-methylpropanesulphonic acid with an aqueous solution $SA_{Na}$-$_1$ and at least one sodium salt, advantageously for at least 1 minute, in order to form an aqueous solution or an aqueous suspension $SA_{Na-2}$;
2) distillation, at a pressure lower than atmospheric pressure, of the aqueous solution or of the aqueous suspension $SA_{Na-2}$ in order to form a suspension $S_{Na-1}$;
3) solid-liquid separation of the suspension $S_{Na-1}$ and isolation of the crystals of the suspension $S_{Na-1}$ obtained at the end of step 2) in the form of a composition $C_{Na-1}$.

The crystals obtained are in the crystalline form of the sodium salt of 2-acrylamido-2-methylpropanesulphonic acid.

"Sodium salt(s)" in the aqueous solution or suspension $SA_2$ should be understood to mean at least one inorganic salt, for example sodium hydroxide, sodium carbonate, sodium bicarbonate or mixtures thereof.

Preparing potassium 2-acrylamido-2-methylpropanesulfonate in crystalline form is done according to the method described in patent application FR2302310.

The present invention also relates to the method for producing the crystalline form of the potassium salt of 2-acrylamido-2-methylpropanesulphonic acid comprising at least the following successive steps:

1) mixing of 2-acrylamido-2-methylpropanesulphonic acid with an aqueous solution $SA_{K-1}$ and at least one potassium salt, advantageously for at least 1 minute, in order to form an aqueous solution or an aqueous suspension $SA_{K-2}$;
2) distillation, at a pressure lower than atmospheric pressure, of the aqueous solution or of the aqueous suspension $SA_{K-2}$ in order to form a suspension $S_{K-1}$;
3) solid-liquid separation of the suspension $S_{K-1}$ and isolation of the crystals of the suspension $S_{K-1}$ obtained at the end of step 2) in the form of a composition $C_{K-1}$.

The crystals obtained are in the crystalline form of the potassium salt of 2-acrylamido-2-methylpropanesulphonic acid.

"Potassium salt(s)" in the aqueous solution or suspension $SA_{K-2}$ should be understood to mean at least one inorganic salt, for example potassium hydroxide, potassium carbonate, potassium bicarbonate or mixtures thereof.

The preparation of ammonium 2-acrylamido-2-methylpropanesulfonate ($CH_2$=CH-C(=O)-NH-C($CH_3$)$_2$-$CH_2$-S(=O)$_2$O$^-$ $^+NH_4$) in crystalline form is carried out according to a process comprising at least the following successive steps:

1) Tubing of gaseous ammonia into a solution or suspension of 2-acrylamido-2-methylpropanesulphonic acid in order to form a solution $S_{NH4-1}$;
2) Optionally evaporate water (advantageously under atmospheric pressure or under vacuum);
3) cooling of the aqueous solution $S_{NH4-1}$ in order to obtain a suspension $S_{NH4-2}$ of ammonium 2-acrylamido-2-methylpropanesulphonate crystals;
4) solid-liquid separation of the suspension $S_{NH4-2}$ and isolation of the crystals of the suspension $S_{NH4-2}$ obtained at the end of step 3) in the form of a composition $C_{NH4-1}$.

The mobile unit **U1** advantageously comprises at least one mixture subunit and at least one filtration subunit. These subunits are known to a person skilled in the art and can correspond to those described in document WO 2018/172676 and the patent application FR 2302303.

This mobile unit **U1** is a delocalisable modular unit which can be transported by lorry or by rail transport.

This mobile unit **U1** contains a mobile storage subunit to collect the **AMPS.OS** solution **S1.** This solution **S1** comes from the draining of the **AMPS.S** preparation and is therefore constituted of a mixture of the filtrates and of the solutions for washing the **AMPS.S** crystals (crystalline form of AMPS salt). The mobile storage subunit is preferably a tank.

Preferably, the **AMPS.S** is prepared by purification of 2-acrylamido-2-methylpropane sulfonic acid in powder form previously stored in the location **A** in a mobile storage unit located in the proximity of the mobile unit **U1** (and therefore distinct from the mobile storage subunit). This storage unit is replenished by lorry or rail transport from production sites of 2-acrylamido-2-methylpropane sulfonic acid which could be distant from the location by several tens or hundreds of kilometres. The mobile storage unit in the proximity of the mobile unit **U1** can have any shape and orientation. It can be, for example, cylindrical or rectangular and oriented horizontally or vertically. The volume and the dimensions are only limited by the condition that the storage units can be moved.

Advantageously, the 2-acrylamido-2-methylpropane sulfonic acid in powder form stored in the mobile storage unit in the location A has been previously obtained on its production site by a reaction between acrylonitrile, fuming sulfonic acid and iso-butylene containing less than 1000ppm of butadiene and less than 100ppm of butene (document WO 201746546).

The X ray powder diffraction diagrams for **AMPS.S** are done conventionally by X ray crystallography, X ray radiocrystallography or diffractometry. An example of a piece of equipment is a Rigaku-brand Miniflex II diffractometer equipped with a copper source.

Advantageously, the location **A'** is a location which makes it possible to install at least one mobile storage unit, at least one mobile polymerisation unit and at least one mobile dilution unit. Thus, the location **A'** advantageously makes it possible to have clean water for the radical polymerisation of **APMS.S** (for example, water coming from a method for treating industrial water and/or rainwater), but also water of a lesser quality for preparing aqueous solutions (in particular, **SS1** or **SS2**).

The mobile unit **U3** is advantageously composed of at least one polymerisation subunit such as a reactor in inverted conic tubular shape (inverted cone). Thus polymerisation subunit makes it possible to discharge the polymer gel by application of an air pressure on the surface of the gel or in the form of a tipper which discharges the gel mass by making the reactor tip. Advantageously, this mobile unit **U3** also contains storage subunits for additives necessary for gel polymerisation (generally, one storage unit per additive). These additives are, for example, initiators (oxidiser/reducer, azos), polymerisation regulators, enzyme (glucose oxidase). The polymerisation additives and the gel polymerisation conditions are known to a person skilled in the art. The features of each storage unit are adapted to the physicochemical properties and to the quantities of the different additives. The mobile unit **U3** is a delocalisable modular unit which can be transported by lorry or by rail transport.

Preferably, the polymerisation of the **AMPS.S** solution **S3** in composition **CA'** in the mobile unit **U3** is done with an initial concentration (before mixing **S2** and **S3**) of **AMPS.S** in the solution **S3** greater than 20% by weight, even more preferably greater than 30% by weight, and even more preferably, greater than 40% by weight. The initial concentration of **AMPS.S** in the solution **S3** is advantageously less than 70% by weight.

Advantageously, the initial polymerisation temperature is the ambient temperature, namely between 15 and 30°C, and the final polymerisation temperature of the **AMPS.S** solution **S3** in composition **CA'** in the mobile unit **U3** is greater than 80°C. A person skilled in the art will know how to adapt the polymerisation conditions to reach this temperature.

Preferably, the gel polymerisation of the **AMPS.S** solution **S3** in composition **CA'** within the mobile unit **U3** is initiated in the presence of glucose oxidase. The radical polymerisation requires the absence of any oxygen traces in the polymerisation environment. The glucose oxidase is intended to deoxygenate the solution **S3.** The use of bubbling with inert gases such as nitrogen or argon is therefore generally useless in the presence of glucose oxidase. This reduces the need, all the more, of locally producing high energy-consuming inert gases and atmospheric releases, sources of pollution.

The polymer **P** coming from the gel polymerisation in the mobile unit **U3** is dissolved in a mobile unit **U4** in a saline solution **SS1** containing at least 1g/L of alkaline and/or alkaline earth salts in water to obtain a polymer **P** solution **SM.**

The mobile unit **U4** is a delocalisable modular unit which can be transported by lorry or by rail transport.

In a preferred embodiment, at the end of preparing the polymer **P** by gel polymerisation of the **AMPS.S** solution **S3** in composition **CA'** in the mobile unit **U3,** the polymer **P** gel obtained is granulated in a granulation subunit to obtain polymer **P** gel pieces, which are directly dissolved in the solution **SS1** to obtain the solution **SM** in the mobile unit **U4.**

The size of the aqueous polymer **P** gel pieces at the end of granulation is not specifically limited. In an embodiment of the invention, the granulated aqueous polyacrylamide gel pieces advantageously have a size such as at least two dimensions (length and diameter in the case of pieces in the form of cylindrical granules) are not greater than 1cm, preferably not greater than 0.5cm. Preferably, three dimensions (width, length and height in the case of parallelepiped-shaped pieces) of the aqueous polyacrylamide gel pieces should not be greater than 1cm, preferably not greater than 0.5cm. No lower limit is necessary for the aqueous polyacrylamide gel pieces, as the smaller the pieces are, the more easily the polymer dissolves. Generally, the aqueous polyacrylamide gel pieces can have a size such that the three dimensions are as low as 0.1cm. Often, the aqueous polyacrylamide gel pieces tend to have three dimensions, each of between 0.1cm and 0.5cm.

In principle, any type of granulation means can be used to granulate the water-soluble polymer gel into smaller pieces. Examples of suitable means include cutting devices, such as cutters or perforated plates, crushers, kneaders, static or dynamic mixers, or water jets. A person skilled in the art will choose the suitable means and its conditions of use to obtain the gel pieces of predetermined sizes and shapes.

Advantageously, the polymer **P** gel pieces obtained at the end of granulation are directly added into a dissolution tank of the mobile unit **U4.** In this case, the dissolution in the saline solution **SS1** is accelerated by means of a stirring blade. The gel pieces can also be dissolved within a conduit equipped with, or not, static or dynamic mixers. The combination of a conduit and a dissolution tank is also possible. Advantageously, the polymer **P** gel pieces are not stored between granulation and dissolution.

Advantageously, between the mobile units **U3** and **U4,** the polymer **P** in the form of gel is conveyed by a screw conveyor to be granulated in a granulation subunit.

Preferably, the saline solution **SS1** or **SS2** contains between 1g/L and 350g/L of alkaline and/or alkaline earth salts in water, even more preferably between 10g/L and 300g/L.

Preferably, the saline solution **SS1** or **SS2** is drawn directly within the location **A.** As an example, this solution **SS1** or **SS2** can be seawater drawn within an offshore oil platform.

The saline solution **SS1** can optionally be prepared within the mobile unit **U4** in a dissolution tank and/or in a conduit equipped with static and/or dynamic mixers by adding the required quantities of salts to the water. The solution **SS1** or **SS2** preferably contains sodium (alkaline salt) and/or calcium (alkaline earth salt), for example a salt chosen from among calcium chloride, calcium bromide, sodium chloride, and their mixtures.

Advantageously, the mobile unit **U4** comprises at least one dissolution subunit, for example a tank provided with a stirring blade and/or a conduit provided with mixers. Advantageously, it also comprises a tank for storing the saline solution **SS1.**

During the preparation of the solution **SS1** or **SS2,** various compounds known to a person skilled in the art can be added, like those cited in document SPE 152596. Thus, the solution **SS1** or **SS2** can comprise, for example:

- Clay anti-swelling agents such as potassium chloride or choline chloride, and/or
- Biocides for preventing the development of bacteria, in particular sulphate-reducing bacteria, which can form viscous masses reducing the passage surfaces. Examples include glutaraldehyde, which is the most used, or indeed formaldehyde or the isothiazolinones, and/or
- Oxygen reducers such as ammonium bisulphite for preventing the destruction of the other components by oxidation and corrosion of the injection tubes, and/or
- Anti-corrosion additives for protecting the tubes from oxidation by residual quantities of oxygen, with N,N dimethylformamide being preferred, and/or
- Lubricants such as oil distillates, and/or
- Iron chelating agents such as citric acid, EDTA (ethylene diamine tetra-acetic) acid, phosphonates, and/or
- Antiscaling agents such as phosphates, phosphonates, polyacrylates or ethylene glycol.

For this mobile unit **U4,** no water treated for polymerisation is necessary for preparing the solution **SS1.** This unit can use oil production water (conditioned for injection) or aquifer water.

The location **B** is advantageously a location which makes it possible to install at least one mobile storage unit, at least one mobile dilution unit. The location **B** in particular makes it possible to inject a fluid into an underground formation to extract hydrocarbons (oil and/or gas).

The mobile unit **U5** is advantageously a delocalisable unit composed of at least one dilution subunit, for example a tank provided with a stirring blade and/or a conduit equipped with static and/or dynamic mixers. Optionally, the mobile unit **U5** comprises a tank for storing the solution **SM.**

The mobile unit **U5** is a delocalisable modular unit which can be transported by lorry or by rail transport.

Within this mobile unit **U5,** the saline solution **SM** is diluted by at least a factor 4 and as a maximum a factor 60 by the saline solution **SS2** to obtain a solution **SF** containing less than 0.6% by weight of polymer **P.** As an example, for a solution containing 60% by weight of polymer **P,** a dilution by a factor 4 corresponds to obtaining a solution containing 15% by weight of polymer **P.**

Preferably, the solution **SF** contains between 0.01% and 0.4% by weight of polymer **P,** even more preferably between 0.02% and 0.3% by weight of polymer **P.**

Like for the mobile unit **U4,** the saline solution **SS2** can be prepared within the mobile unit **U5,** for example in a dissolution tank by adding the required quantities of salts to the water or by directly drawing the solution **SS2** within the location **B.**

After having optionally been stored in a storage tank, the solution **SF** is injected into the underground formation in order to extract hydrocarbons (oil and/or gas). The recovery of hydrocarbons is done, either by sweeping the underground formation (conventionally assisted extraction of hydrocarbons), or thanks to the natural pressure of the hydrocarbons after a hydraulic fracturing operation (non-conventionally).

Thus, the injection of the solution **SF** into the underground formation is followed by a step of recovering hydrocarbons by assisted extraction by sweeping the underground formation by means of the solution **SF,** or by a step of recovering hydrocarbons by hydraulic fracturing of the underground formation by means of the solution **SF.**

According to a preferred embodiment, the injection method of the invention is performed with the locations **A** and **A'** which overlap or which are contiguous. In other words, in this configuration, the 2 locations become one.

The injection method of the invention comprises the following steps:

- in the location **A:** polymerisation (in solution, example of a method: document US 2013090425) in a unit **U2** of the **AMPS.OS** solution **S1** collected in the mobile unit **U1** to obtain an aqueous polymer **P'** solution **S2,**
- transfer through pipes of the solution **S2** from the unit **U2** of the location **A** to the mobile unit **U3** of the location **A',**

- in the location **A':** preparation in a mobile unit **U3,** before the polymerisation of **AMPS.S,** of a composition **CA'** comprising the **AMPS.S** solution **S3** and at least some of the polymer **P'** solution **S2,** the mass ratio **[P']/[AMPS.S]** being of between 0.05 and 0.20, with **[P']** concentration by weight of polymer **P' in** the composition **CA'** and **[AMPS.S]** concentration by weight of **AMPS.S** in the composition **CA'.**

The transfer of the **AMPS.OS** solution **S1** from the storage subunit of the mobile unit **U1** to the unit **U2** is done preferably through a conduit (pipe).

The polymerisation of the **AMPS.OS** solution **S1** in the unit **U2** is a polymerisation in solution known to a person skilled in the art to obtain a polymer **P'** of average molecular weight by weight advantageously of between 500 and 500000 daltons. Adding the polymer **P'** solution **S2** into the solution **S3** is done preferably before adding redox and/or thermal and/or glucose oxidase initiators.

The unit **U2** is a delocalisable modular unit which can be transported by lorry or by rail transport and which is composed of at least one polymerisation subunit, for example a tank provided with a stirring blade.

According to the distances between the locations **A'** and **B,** the transfer of the solution **SM** from the location **A'** to the location **B** is done by pipes or by transport units.

For example, the distances between the locations **A'** and **B** can be between 10 and 3000km, or between 10 and 1500km, or between 20 and 500km, or also between 30 and 300km.

The pipes ensuring the transfer of the solution **SM** between the locations **A'** and **B** are preferably rigid and can include static mixers.

For the transport of the solution **SM** between the locations **A'** and **B,** a suitable transport unit is used. The transport unit can have a volume of $1m^3$ to $40m^3$, in particular of $5m^3$ to $40m^3$, preferably of 10 to $30m^3$, for example of $20m^3$ to $30m^3$ or of 15 to $25m^3$. Examples of suitable transport units comprise ships comprising at least one opening or tank containers.

The transport of the solution **SM** between the locations **A'** and **B** can be done by any type of transport means suitable for transporting the transport unit, for example by lorries, carriages or ships.

The term "transport unit" means one or more advantageously distinct transport units such as containers, for example ISO containers or intermediate loose containers, which are loaded on suitable transport means, for example trailers, container carriages or ships. The transport means can transport one single transport unit or a plurality of transport units. The term "transport unit" further includes the transport units in which the transport compartment is temporarily or permanently fixed to the transport means, like for example tankers or tank cars.

In an embodiment, the transport is done by lorries. The transport unit can also be fixed to a lorry. In an embodiment, the transport unit can be an ISO tank container.

In an embodiment, tanks fixed to a lorry can be used. In an embodiment, the reservoir comprises an outlet opening at the rear end of the lorry and, to facilitate the removal of the contents, the reservoir can be inclined. In an embodiment, the reservoir comprises an outlet opening on the lower side of the reservoir. Furthermore, the tank can comprise a cone on the lower side of the tank and the outlet opening is located at the lower end of the cone. Filling the transport unit with the solution **SM** can be done by pumping the solution **SM** into the transport unit.

The transport time, i.e. the transport time of the transport unit filled with polymer **P** solution **SM,** can be very different, according to the distance between the locations **A'** and **B.** It can vary by a few minutes to several days, for example from 1 hour to 28 days, in particular from 2 hours to 14 days, in particular from 5 hours to 7 days. In an embodiment of the invention, a homogenisation step such as described below can be carried out during transport. In an embodiment, the transport unit, for example a lorry, can comprise a rotary drum making it possible to perform the homogenisation. In embodiments, the transport unit can comprise a circulation loop equipped with a pump and optionally mixture units, for example static mixers, such that the polymer **P** solution **SM** can be circulated during transport.

Advantageously the polymer **P** solution **SM** in the location **A'** is stored in a maturation and storage unit before being transferred to the location **B.** This maturation and storage unit is advantageously constituted of one or more tanks in series provided with stirring blades.

**Figures**

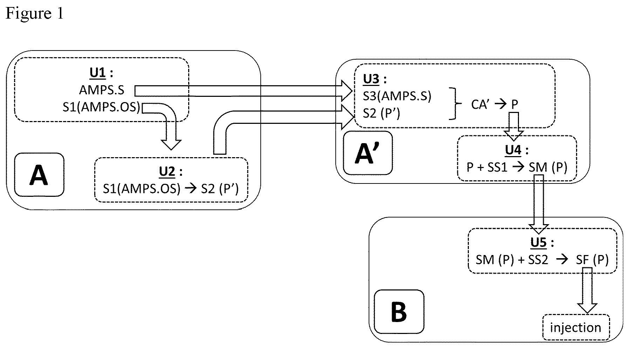

Figure 1 represents the present invention according to which the **AMPS.S** monomer is polymerised in the presence of polymer **P'.**

**Description of the figures**

The device of figure 1 comprises:

- a location **A** including:

  * the preparation in a mobile unit **U1** of **AMPS.S,**
  * the collection of the **AMPS.OS** aqueous solution **S1,** coming from the draining of the preparation of the **AMPS.S,**

- a location **A'** including:

  * the preparation in a mobile unit **U3** of a homopolymer **P** by gel polymerisation of an **AMPS.S** aqueous solution **S3** in a composition **CA',**
  * the preparation in a mobile unit **U3,** before the polymerisation of **AMPS.S,** of a composition **CA'** containing the **AMPS.S** solution **S3** and at least some of the polymer **P'** solution **S2,**

* the dissolution in a mobile unit **U4** of the polymer **P** in a saline solution **SS1** to obtain a polymer **P** solution **SM,**
* the transfer of the solution **SM** from the location **A'** to a location **B,**
* the polymerisation (in solution) in a unit **U2** of the **AMPS.OS** solution **S1** to obtain a polymer **P'** aqueous solution **S2,**

- the transfer of the solution **S2** from the unit **U2** of the location **A** to the mobile unit **U3** of the location **A',**
- the location **B** including:

* the dilution in a mobile unit **U5** of the solution **SM** by a saline solution **SS2** to obtain a solution **SF** containing less than 0.6% by weight of polymer **P,**
* the injection of the solution **SF** into the underground formation.

## Claims

1. Method for injecting a sodium or potassium or ammonium 2-acrylomido-2-methylpropanesulfonate homopolymer **P** aqueous solution and/or its salts, the homopolymer **P** having an average molecular weight by weight greater than 1 million daltons, the homopolymer **P** aqueous solution being injected into an underground formation for the assisted extraction of hydrocarbons or hydraulic fracturing, said method comprising the following successive steps:

   - in a location **A:**

   * preparation in a mobile unit **U1** of sodium or potassium 2-acrylamido-2-methylpropanesulfonate in crystalline form **(AMPS.S),** sodium 2-acrylamido-2-methylpropanesulfonate in crystalline form having a powder X-ray diffraction pattern comprising peaks at 11.70°; 12.20°; 13.2°; 13.5°; 15.60°; 16.80°; 17.80°; 18.5°; 19.1°; 20.6°; 21.4°; 23.3°; 25.1°; 25.8°; 26.9°; 29.10°; 29.50°; 31.0°; 33°; 33.6°; 34.4°; 35.2°; 35.9°; 37.1°; 38.4°; 39.6°; 41.10°; 42.90°; 45.10°; 46.0°; 47.2°; 47.6°, 2-theta degrees, potassium 2-acrylamido-2-methylpropanesulfonate in crystalline form having a powder X-ray diffraction pattern comprising peaks at 13.10°; 14.4°; 16.3°; 19.8°; 23.50°; 24.3°; 26.9°; 27.6°; 29.3°; 30.6°; 31.6°; 34.3°; 36.1°; 41.7°; 44.6°; 46.7°, degrees 2-theta, ammonium 2-acrylamido-2-methylpropanesulfonate in crystalline form having a powder X-ray diffraction pattern comprising peaks at 10.10°; 13.10°; 13.2°; 17.5°; 15.60°; 18.10°; 19.50°; 20.0°; 21.4°; 22.8°; 23.6°; 24.8°; 25.1°; 25.8°; 26.2°; 27.4°; 28.10°; 29.4°; 30.2°; 30.8°; 32.0°; 32.9°; 33.2°; 33.9°; 34.4°; 35.0°; 36.2°; 37.7°; 38.8°; 39.6°; 40.4°; 41.4°; 41.9°; 42.8°; 43.5°; 44.8°; 45.5°; 45.7°; 46.5°; 47.0°; 47.4°, degrees 2-theta,
* collection of an aqueous solution **S1** of sodium or potassium or ammonium 2-acrylamido-2-methylpropanesulfonate **AMPS.OS,** coming from the purge of the **AMPS.S** preparation in the mobile unit **U1,**
* polymerisation in a unit **U2** of the **AMPS.OS** solution **S1** collected in the mobile unit **U1** to obtain a polymer **P'** aqueous solution **S2,**
* transfer by pipes of the solution **S2** from unit **U2** of location **A** to a mobile unit **U3** of a location **A',**

   - in the location **A':**

   * preparation in a mobile unit **U3** of a composition **CA'** containing an **AMPS.S** solution **S3** and at least some of the polymer **P'** solution **S2,** the mass ratio **[P']/[AMPS.S]** being of between 0.05 and 0.20, with **[P']** concentration by weight of polymer **P'** in the composition **CA'** and **[AMPS.S]** concentration by weight of **AMPS.S** in the composition **CA',**
   * preparation in the mobile unit **U3** of a homopolymer **P** by gel polymerisation of **AMPS.S** aqueous solution **S3** in composition **CA',**
   * dissolution in a mobile unit **U4** of the polymer **P** in a saline solution **SS1** containing at least 1g/L of alkaline and/or alkaline earth salts in water to obtain a polymer **P** solution **SM,**
   * transfer of the solution **SM** from the location **A'** to a location **B,**

   - in the location **B:**

   * dilution in a mobile unit **U5** of at least a factor 4 and as a maximum a factor 60 of the solution **SM** by a saline solution **SS2** containing at least 1 g/L of alkaline and/or alkaline earth salts in water to obtain a solution **SF** containing less than 0.6% by weight of polymer **P,**
   * injection of the solution **SF** into the underground formation.

**2.** Method according to claim 1, **characterised in that** the locations **A** and **A'** overlap or are contiguous.

**3.** Method according to one of the preceding claims, **characterised in that** the transfer of the solution **SM** from the location **A'** to the location **B** is done by pipes or by transport units.

**4.** Method according to one of the preceding claims, **characterised in that** the **AMPS.S** is prepared by purification of 2-acrylamido-2-methylpropane sulfonic acid previously stored in the location **A** in a mobile storage unit.

**5.** Method according to one of the preceding claims, **characterised in that** at the end of preparing the polymer **P** by gel polymerisation of the **AMPS.S** solution **S3** in composition **CA'** in the mobile unit **U3,** the polymer **P** gel obtained is granulated in a granulation unit to obtain polymer **P** gel pieces, which are directly dissolved in the saline solution containing at least 1g/L of alkaline and/or alkaline earth salts to obtain the solution **SM** in the mobile unit **U4.**

**6.** Method according to one of the preceding claims, **characterised in that** the polymerisation of the polymer **P** in the mobile unit **U3** is initiated in the presence of glucose oxidase.

**7.** Method according to one of the preceding claims, **characterised in that** the solution **SM** at the location **A'** is stored in a maturation and storage unit before being transferred to the location **B.**

**8.** Method according to one of the preceding claims, **characterised in that** the polymerisation of the **AMPS.S** solution **S3** in composition **CA'** in the mobile unit **U3** is done with an initial concentration of **AMPS.S** in the solution **S3** greater than 20% by weight.

**9.** Method according to one of the preceding claims, **characterised in that** the final temperature of the polymerisation of the **AMPS.S** solution **S3** in composition **CA'** in the mobile unit **U3** is greater than 80°C.

**10.** Method according to one of the preceding claims, **characterised in that** the injection of the solution **SF** into the underground formation is followed by a step of recovering hydrocarbons by assisted extraction by sweeping the underground formation by means of the solution **SF.**

**11.** Method according to one of the preceding claims, **characterised in that** the injection of the solution **SF** in the underground formation is followed by a step of recovering hydrocarbons by hydraulic fracturing of the underground formation by means of the solution **SF.**

**12.** Method according to one of claims 3 or 5, **characterised in that** the polymer **P'** has an average molecular weight by weight of between 500 and 500000 Daltons.

**Patentansprüche**

**1.** Verfahren zur Injektion einer wässrigen Lösung eines Natrium- oder Kalium- oder Ammonium-2-acrylamido-2-methylpropansulfonat-Homopolymers **P** und/oder ihrer Salze, wobei das Homopolymer **P** ein mittleres Molekulargewicht von mehr als 1 Million Dalton aufweist, die wässrige Lösung des Homopolymers **P** in eine unterirdische Formation zur assistierten Gewinnung von Kohlenwasserstoffen oder zur hydraulischen Frakturierung eingespritzt wird und das Verfahren folgende aufeinanderfolgende Schritte umfasst:

- an einem Ort **A:**

    *Herstellung in einer mobilen Einheit **U1** von Natrium- oder Kalium-2-acrylamido-2-methylpropansulfonat in kristalliner Form **(AMPS.S),**
    Natrium-2-acrylamido-2-methylpropansulfonat in kristalliner Form mit einer Pulverröntgendiffraktometrie, die Maxima bei 11,70°; 12,20°; 13,2°; 13,5°; 15,60°; 16,80°; 17,80°; 18,5°; 19,1°; 20,6°; 21,4°; 23,3°; 25,1°; 25,8°; 26,9°; 29,10°; 29,50°; 31,0°; 33°; 33,6°; 34,4°; 35,2°; 35,9°; 37,1°; 38,4°; 39,6°; 41,10°; 42,90°; 45,10°; 46,0°; 47,2°; 47,6°; 2-Theta Grad aufweist,
    Kalium-2-acrylamido-2-methylpropansulfonat in kristalliner Form mit einer Pulverröntgendiffraktometrie, die Maxima bei 13,10°; 14,4°; 16,3°; 19,8°; 23,50°; 24,3°; 26,9°; 27,6°; 29,3°; 30,6°; 31,6°; 34,3°; 36,1°; 41,7°; 44,6°; 46,7°; 2-Theta-Winkel aufweist,
    Ammonium-2-acrylamido-2-methylpropansulfonat in kristalliner Form mit einer Pulverröntgendiffraktometrie mit Maxima bei 10,10°; 13,10°; 13,2°; 17,5°; 15,60°; 18,10°; 19,50°; 20,0°; 21,4°; 22,8°; 23,6°; 24,8°; 25,1°; 25,8°; 26,2°; 27,4°; 28,10°; 29,4°; 30,2°; 30,8°; 32,0°; 32,9°; 33,2°; 33,9°; 34,4°; 35,0°; 36,2°; 37,7°; 38,8°; 39,6°; 40,4°; 41,4°; 41,9°; 42,8°; 43,5°; 44,8°; 45,5°; 45,7°; 46,5°; 47,0°; 47,4°, 2-Theta-Winkel,
    *Entnahme einer wässrigen Lösung **S1** von Natrium- oder Kalium- oder Ammonium-2-acrylamido-2-methylpropansulfonat **AMPS.OS,** die aus der Spülung der **AMPS.S-**Herstellung in der mobilen Einheit **U1** stammt,

*Polymerisation in einer Einheit **U2** der **AMPS.OS**-Lösung **S1,** die aus der mobilen Einheit **U1** entnommen wurde, um eine wässrige Lösung **S2** des Polymers **P'** zu erhalten,

*Weiterleitung der Lösung **S2** über Rohrleitungen von der Einheit **U2** des Ortes **A** zu einer mobilen Einheit **U3** eines Ortes **A',**

- am Ort **A':**

*Herstellung einer Zusammensetzung **CA'** in einer mobilen Einheit **U3,** die eine **AMPS.S**-Lösung **S3** und mindestens einen Teil der Polymer **P'**-Lösung **S2** enthält, wobei das Massenverhältnis **[P']/[AMPS.S]** zwischen 0,05 und 0,20 liegt, wobei die **[P']**-Konzentration in Gewicht des Polymers **P'** in der Zusammensetzung **CA'** und die **[AMPS.S]**-Konzentration in Gewicht des **AMPS.S** in der Zusammensetzung **CA'** ist,

*Herstellung eines Homopolymers **P** in der mobilen Einheit **U3** durch Gelpolymerisation der wässrigen Lösung **S3** von **AMPS.S** in der Zusammensetzung **CA',**

*Auflösen des Polymers **P** in einer Salzlösung **SS1,** die mindestens 1 g/l Alkali- und/oder Erdalkalisalze in Wasser enthält, in einer mobilen Einheit **U4,** um eine Lösung **SM** des Polymers **P** zu erhalten,

*Weiterleitung der Lösung **SM** von dem Ort **A'** zu einem Ort **B,**

- am Ort **B;**

*Verdünnung der Lösung **SM** mit einer Salzlösung **SS2,** die mindestens 1 g/L Alkali- und/oder Erdalkalisalze in Wasser enthält, in einer mobilen Einheit **U5** um mindestens den Faktor 4 und maximal den Faktor 60, um eine Lösung **SF** zu erhalten, die weniger als 0,6 Gew.-% des Polymers **P** enthält,

*Einspritzung der Lösung **SF** in die unterirdische Formation.

2. Verfahren nach Anspruch 1, **dadurch gekennzeichnet, dass** sich die Orte A und **A'** überschneiden oder aneinander angrenzen.

3. Verfahren nach einem der vorhergehenden Ansprüche, **dadurch gekennzeichnet, dass** die Weiterleitung der Lösung **SM** vom Ort **A'** zum Ort **B** über Rohrleitungen oder über Transporteinheiten erfolgt.

4. Verfahren nach einem der vorhergehenden Ansprüche, **dadurch gekennzeichnet, dass** die **AMPS.S** durch Reinigung von 2-Acylamido-2-methylpropansulfonsäure hergestellt wird, die zuvor am Ort **A** in einer mobilen Lagereinheit gelagert wurde.

5. Verfahren nach einem der vorhergehenden Ansprüche, **dadurch gekennzeichnet, dass** das erhaltene Polymer **P**-Gel am Ende der Herstellung des Polymers **P** durch Gelpolymerisation der **AMPS.S**-Lösung **S3** in der Zusammensetzung **CA'** in der mobilen Einheit U3 in einer Granulationseinheit granuliert wird, um Polymer **P**-Gelteile zu erhalten, die direkt in der Salzlösung gelöst werden, die mindestens 1 g/L Alkali- und/oder Erdalkalisalze enthält, um die Lösung **SM** in der mobilen Einheit **U4** zu erhalten.

6. Verfahren nach einem der vorhergehenden Ansprüche, **dadurch gekennzeichnet, dass** die Polymerisation des Polymers **P** in der mobilen Einheit **U3** in Gegenwart von Glucose-Oxidase eingeleitet wird.

7. Verfahren nach einem der vorhergehenden Ansprüche, **dadurch gekennzeichnet, dass** die Lösung **SM** am Ort **A'** in einer Reife- und Lagereinheit gelagert wird, bevor sie an den Ort **B** überführt wird.

8. Verfahren nach einem der vorhergehenden Ansprüche, **dadurch gekennzeichnet, dass** die Polymerisation der **AMPS.S**-Lösung **S3** in der Zusammensetzung **CA'** in der mobilen Einheit **U3** mit einer Anfangskonzentration von **AMPS.S** in der Lösung **S3** von mehr als 20 Gew.-% durchgeführt wird.

9. Verfahren nach einem der vorhergehenden Ansprüche, **dadurch gekennzeichnet, dass** die Endtemperatur der Polymerisation der **AMPS.S**-Lösung **S3** in der Zusammensetzung **CA'** in der mobilen Einheit **U3** mehr als 80°C beträgt.

10. Verfahren nach einem der vorhergehenden Ansprüche, **dadurch gekennzeichnet, dass** auf die Einspritzung der Lösung **SF** in die unterirdische Formation ein Schritt der Gewinnung von Kohlenwasserstoffen durch assistierte Extraktion folgt, indem die unterirdische Formation mit Hilfe der Lösung **SF** gespült wird.

11. Verfahren nach einem der vorhergehenden Ansprüche, **dadurch gekennzeichnet, dass** auf die Einspritzung der Lösung **SF** in die unterirdische Formation ein Schritt der Gewinnung von Kohlenwasserstoffen durch hydraulische Frakturierung der unterirdischen Formation mit Hilfe der Lösung **SF** folgt.

12. Verfahren nach einem der Ansprüche 3 oder 5, **dadurch gekennzeichnet, dass** das Polymer **P'** ein mittleres Molekulargewicht zwischen 500 und 500.000 Dalton aufweist.

## Revendications

1. / Procédé pour injecter une solution aqueuse d'un homopolymère P de 2-acrylomido-2-méthylpropanesulfonate de sodium ou de potassium ou d'ammonium et/ou de ses sels, l'homopolymère P présentant un poids moléculaire moyen en poids supérieur à 1 million de daltons, la solution aqueuse de l'homopolymère P étant injectée dans une formation souterraine pour l'extraction d'hydrocarbures assistée ou la fracturation hydraulique, ledit procédé comprenant les étapes successives suivantes :

   - à un emplacement A :

     * préparation dans une unité mobile U1 de 2-acrylomido-2-méthylpropanesulfonate de sodium ou de potassium sous forme cristalline (AMPS.S),
     le 2-acrylomido-2-méthylpropanesulfonate de sodium sous forme cristalline présentant un motif de diffraction à rayons X en poudre comprenant des pics à 11,70° ; 12,20° ; 13,2° ; 13,5° ; 15,60° ; 16,80° ; 17,80° ; 18,5° ; 19,1° ; 20,6° ; 21,4° ; 23,3° ; 25,1° ; 25,8° ; 26,9° ; 29,10° ; 29,50° ; 31,0° ; 33° ; 33,6° ; 34,4° ; 35,2° ; 35,9° ; 37,1° ; 38,4° ; 39,6° ; 41,10° ; 42,90° ; 45,10° ; 46,0° ; 47,2° ; 47,6°, degrés 2-thêta,
     le 2-acrylomido-2-méthylpropanesulfonate de potassium sous forme cristalline présentant un motif de diffraction à rayons X en poudre comprenant des pics à 13,10° ; 14,4° ; 16,3° ; 19,8° ; 23,50° ; 24,3° ; 26,9° ; 27,6° ; 29,3° ; 30,6° ; 31,6° ; 34,3° ; 36,1° ; 41,7° ; 44,6° ; 46,7°, degrés 2-thêta,
     le 2-acrylomido-2-méthylpropanesulfonate d'ammonium sous forme cristalline présentant un motif de diffraction à rayons X en poudre comprenant des pics à 10,10° ; 13,10° ; 13,2° ; 17,5° ; 15,60° ; 18,10° ; 19,50° ; 20,0° ; 21,4° ; 22,8° ; 23,6° ; 24,8° ; 25,1° ; 25,8° ; 26,2° ; 27,4° ; 28,10° ; 29,4° ; 30,2° ; 30,8° ; 32,0° ; 32,9° ; 33,2° ; 33,9° ; 34,4° ; 35,0° ; 36,2° ; 37,7° ; 38,8° ; 39,6° ; 40,4° ; 41,4° ; 41,9° ; 42,8° ; 43,5° ; 44,8° ; 45,5° ; 45,7° ; 46,5° ; 47,0° ; 47,4°, degrés 2-thêta,
     * collecte d'une solution aqueuse S1 de 2-acrylomido-2-méthylpropanesulfonate de sodium ou de potassium ou d'ammonium AMPS.OS, provenant de la purge de la préparation d'AMPS.S dans l'unité mobile U1,
     * polymérisation dans une unité U2 de la solution S1 d'AMPS.OS collectée dans l'unité mobile U1 pour obtenir une solution aqueuse S2 de polymère P',
     * transfert par tuyaux de la solution S2 depuis l'unité U2 de l'emplacement A vers une unité mobile U3 d'un emplacement A',

   - à l'emplacement A' :

     * préparation dans une unité mobile U3 d'une composition CA' contenant une solution S3 d'AMPS.S et au moins une partie de la solution S2 de polymère P', le rapport de masse [P']/[AMPS.S] étant entre 0,05 et 0,20, [P'] étant la concentration en poids du polymère P' dans la composition CA' et [AMPS.S] étant la concentration en poids de l'AMPS.S dans la composition CA',
     * préparation dans l'unité mobile U3 d'un homopolymère P par polymérisation en gel d'une solution aqueuse S3 d'AMPS.S dans la composition CA',
     * dissolution dans une unité mobile U4 du polymère P dans une solution saline SS1 contenant au moins 1 g/L de sels alcalins et/ou alcalino-terreux dans l'eau pour obtenir une solution SM de polymère P,
     * transfert de la solution SM depuis l'emplacement A' vers un emplacement B,

   - à l'emplacement B :

     * dilution dans une unité mobile U5 d'au moins un facteur 4 et, en tant que maximum, d'un facteur 60 de la solution SM par une solution saline SS2 contenant au moins 1 g/L de sels alcalins et/ou alcalino-terreux dans l'eau pour obtenir une solution SF contenant moins de 0,6 % en poids de polymère P,
     * injection de la solution SF dans la formation souterraine.

2. / Procédé selon la revendication 1, **caractérisé en ce que** les emplacements A et A' se chevauchent ou sont contigus.

3. / Procédé selon l'une des revendications précédentes, **caractérisé en ce que** le transfert de la solution SM de l'emplacement A' vers l'emplacement B est effectué par des tuyaux ou par des unités de transport.

4. / Procédé selon l'une des revendications précédentes, **caractérisé en ce que** l'AMPS.S est préparé par la purification d'acide sulfonique de 2-acrylomido-2-méthylpropanesulfonate préalablement stocké à l'emplacement A' dans une unité de stockage mobile.

5. / Procédé selon l'une des revendications précédentes, **caractérisé en ce qu'**à la fin de la préparation du polymère P par polymérisation en gel de la solution S3 d'AMPS.S dans la composition CA' dans l'unité mobile U3, le gel de polymère P obtenu est granulé dans une unité de granulation afin d'obtenir des morceaux de gel de polymère P, qui sont directement dissous dans une solution saline contenant au moins 1 g/L de sels alcalins et/ou alcalino-terreux pour obtenir la solution SM dans l'unité mobile U4.

6. / Procédé selon l'une des revendications précédentes, **caractérisé en ce que** la polymérisation du polymère P dans l'unité mobile U3 est entreprise en présence de glucose-oxydase.

7. / Procédé selon l'une des revendications précédentes, **caractérisé en ce que** la solution SM à l'emplacement A' est stockée dans une unité de maturation et de stockage avant d'être transférée jusqu'à l'emplacement B.

8. / Procédé selon l'une des revendications précédentes, **caractérisé en ce que** la polymérisation de la solution S3 d'AMPS.S dans la composition CA' dans l'unité mobile U3 est effectuée avec une concentration initiale d'AMPS.S dans la solution S3 supérieure à 20 % en poids.

9. / Procédé selon l'une des revendications précédentes, **caractérisé en ce que** la température finale de la polymérisation de la solution S3 d'AMPS.S dans la composition CA' dans l'unité mobile U3 est supérieure à 80 °C.

10. / Procédé selon l'une des revendications précédentes, **caractérisé en ce que** l'injection de la solution SF dans la formation souterraine est suivie d'une étape de récupération d'hydrocarbures par extraction assistée en balayant la formation souterraine à l'aide de la solution SF.

11. / Procédé selon l'une des revendications précédentes, **caractérisé en ce que** l'injection de la solution SF dans la formation souterraine est suivie d'une étape de récupération d'hydrocarbures par la fracturation hydraulique de la formation souterraine à l'aide de la solution SF.

12. / Procédé selon l'une des revendications 3 ou 5, **caractérisé en ce que** le polymère P' présente un poids moléculaire moyen en poids entre 500 et 500000 Daltons.

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018172684 A
- WO 2018172682 A
- EP 3601220 A
- EP 3601222 A
- FR 2302305
- FR 2302307
- FR 2302310
- WO 2008071808 A
- US 5633329 A
- US 2013090425 A
- FR 2302303
- WO 2018172676 A
- WO 201746546 A